# FASCICULE DE BREVET EUROPEEN

(11) **EP 2 476 352 B1**
(45) Date de publication et mention de la délivrance du brevet: **28.08.2013**
(21) Numéro de dépôt: 12305013.0
(22) Date de dépôt: 05.01.2012
(51) Int. Cl.: A47J 31/057, A47J 31/36

(54) **Machine de préparation de boissons à double chambre**
Getränkezubereitungsmaschine mit Doppelkammer
Dual-chamber machine for preparing beverages

(30) Priorité: 17.01.2011 FR 1150359
(43) Date de publication de la demande: 18.07.2012
(73) Titulaire: SEB S.A., 69130 Ecully (FR)
(72) Inventeur: Morin, Gilles, 21490 Varois et Chaignot (FR); Masson, Antony, 21850 Saint Apollinaire (FR)
(74) Mandataire: Bourrières, Patrice

(56) Documents cités:
- EP-A1- 0 371 222
- EP-A2- 0 549 887
- DE-A1- 19 545 111
- US-A1- 2004 244 599

## Description

La présente invention concerne le domaine technique des machines utilisées pour la préparation de boissons par infusion d'eau chaude avec des produits alimentaires. Dans une application préférée mais non exclusive, l'invention se rapporte au domaine des machines à café telles que les cafetières électriques, les machines à expresso ou analogues.

Dans le domaine ci-dessus il est connu des cafetières électriques, comme par exemple décrites par la demande FR 2 830 733, qui comprennent une chambre d'infusion formée d'un support porte-filtre placé au-dessus d'un logement de réception d'une verseuse et alimentée en eau chaude à partir d'un réservoir par un système de chaudière assurant la propulsion de l'eau par vaporisation partielle de cette dernière. Ce type de cafetière électrique est particulièrement bien adapté à la préparation d'une quantité assez importante de café dit « filtre » ou « américain » mais, en revanche, n'est pas pratique pour la préparation de café en petite quantité pour une dose individuelle, par exemple, ou encore pour la production de café plus fort ou plus serré qu'un café filtre.

Pour ce faire, il est connu des machines à café dite machines à expresso qui comprennent une chambre de percolation sous pression qui est placée au-dessus d'une zone d'accueil d'un récipient tel qu'une tasse ou un mug et qui est alimentée en eau chaude sous pression à partir d'un réservoir d'eau par une pompe faisant passer l'eau par des moyens de chauffage avant son admission dans la chambre de percolation. De telles machines permettent la préparation de cafés forts ou expresso en de petites quantités pour un ou deux utilisateurs mais ne permettent pas la préparation de quantités importantes de café de qualité.

Ainsi un utilisateur qui souhaite pouvoir produire les deux types de café, à savoir des cafés expresso ou fort en petite quantité et du café filtre en quantité suffisante pour plusieurs personnes, se trouve dans l'obligation de posséder, d'une part, une cafetière électrique et, d'autre part, une machine à expresso. Or, ces deux appareils sont généralement relativement encombrants de sorte qu'il n'est pas toujours possible de les placer à demeure dans une cuisine de petite taille. Afin de remédier à ce problème d'encombrement, il a été proposé, par un brevet US 7 698 992, une machine à café qui est conçue pour permettre la préparation de café filtre ou d'expresso. La machine à café selon ce brevet comprend une chambre de travail qui peut être équipée au choix soit d'un accessoire porte filtre pouvant recevoir une grande quantité de café moulu pour la préparation de café filtre soit d'un accessoire porte-dose adapté pour recevoir une petite quantité de café en dose individuelle ou en vrac pour la préparation d'expressos. La machine comprend en outre un système de détection de l'accessoire placé dans la chambre de travail de manière à adapter son fonctionnement selon le type d'accessoire utilisé. Une telle machine permet effectivement de préparer deux types de café mais présente l'inconvénient de nécessiter un démontage et un remontage de l'accessoire en fonction du type de café souhaité. Or, le stockage de l'accessoire, qui n'est pas utilisé, n'est pas toujours pratique et présente, de plus, un risque de perte. Par ailleurs, le système d'identification de l'accessoire dans la chambre de travail est relativement complexe et peut devenir une source de dysfonctionnement de la machine.

II est donc apparu le besoin d'une machine qui tout en permettant la préparation des deux types de café soit d'une conception plus simple d'utilisation pour son possesseur et limite les risques de perte de ses accessoires ainsi que les risques de dysfonctionnements.

Afin d'atteindre ces objectifs, l'invention concerne une machine pour préparer une infusion à base d'eau chaude comprenant:
- un réservoir d'eau,
- une chambre d'infusion sans pression comprenant:
- un porte-filtre ouvert en partie haute et pourvu d'une sortie d'infusion en partie basse,
- une bouche d'arrivée d'eau au-dessus du porte-filtre,
- des moyens de chauffage électrique de l'eau,
- un circuit de raccordement des moyens de chauffage au réservoir d'eau,
- un circuit d'alimentation en eau chaude de la bouche d'arrivée de la chambre d'infusion sans pression, raccordé aux moyens de chauffage,
Selon l'invention cette machine comprend en outre :
- une chambre de percolation sous pression qui est étanche à l'eau et distincte de la chambre d'infusion et qui comprend un logement de réception d'une dose d'un produit de percolation, une entrée d'eau sous pression et une sortie de percolation,
- des moyens de mise en pression de l'eau,
- un circuit d'apport de l'eau chaude sous pression à l'entrée de la chambre de percolation, qui est raccordé aux moyens de chauffage électrique de l'eau et qui est en partie au moins distinct du circuit d'alimentation.

La mise en oeuvre sur une même machine d'une chambre d'infusion, d'une part, et d'une chambre de percolation, d'autre part, permet à un utilisateur de la machine de préparer au choix, dans la chambre d'infusion du café ou du thé, et dans la chambre de percolation un café fort par exemple sans devoir monter ou démonter des accessoires constitutifs de la machine. De plus, l'alimentation des chambres d'infusion et de percolation à partir d'un même réservoir d'eau permet de réduire l'encombrement de la machine par rapport à une machine qui comprendrait un réservoir dédié à la chambre de percolation et un autre réservoir dédié à la chambre d'infusion.

Selon une forme de réalisation visant à limiter autant que faire se peut l'encombrement de la machine selon l'invention, la chambre de percolation est située en partie au moins au-dessus ou en-dessous de la chambre d'infusion. Cette forme de réalisation permet, de plus, de limiter la quantité de matière nécessaire à la fabrication de la machine et donc d'en réduire le coût de fabrication.

Selon une caractéristique de l'invention, la sortie de percolation est distincte de la sortie d'infusion.

Dans le cadre de cette caractéristique, la machine peut comprendre une tête de distribution comprenant une bouche de distribution raccordée par un tube à la sortie de percolation. Afin de permettre un bon écoulement de la mousse produite pendant la percolation sous pression, le tube pourra posséder un diamètre intérieur supérieur à 5 mm.

Selon une variante de réalisation de cette caractéristique, la tête de distribution peut être mobile entre une position haute et une position basse. Ce mouvement de la tête de distribution permet d'adapter la hauteur de cette dernière à la taille du récipient placé sous la sortie de percolation pour recueillir la boisson chaude préparée dans la chambre de percolation.

Selon une autre caractéristique de l'invention visant à augmenter la compacité de la machine, la sortie de percolation débouche dans ou est raccordée à la sortie d'infusion.

Selon encore une autre caractéristique de l'invention, la chambre de percolation peut comprendre un support amovible destiné à recevoir une dose du produit de percolation. La mise en oeuvre d'un tel support amovible permet de faciliter l'extraction de la dose du produit de percolation une fois que la percolation a été effectuée évitant ainsi à l'utilisateur de se salir ou de se brûler. La dose de produit de percolation placée dans la chambre de percolation peut être une dose de produit en vrac, par exemple, du café moulu ou au contraire une dose préconditionnée de produit telle que, par exemple, une dose de café moulu enfermée dans un sachet en un matériau perméable à l'eau ou encore dans une enveloppe étanche destinée à être perforée à l'intérieur de la chambre de percolation. Dans ce dernier cas, la chambre de percolation pourra alors comprendre des moyens de perforation destinés à permettre le passage de l'eau dans l'enveloppe étanche pour la percolation.

Selon une forme de réalisation de la machine selon l'invention, les moyens de mise en pression de l'eau sont adaptés pour établir une pression d'eau comprise entre 0,5 bar et 8 bars et de préférence inférieure à 5 bars. La mise en oeuvre de telles valeurs de pression d'eau permet d'utiliser les moyens de mise en pression pour alimenter indifféremment la chambre de percolation et la chambre d'infusion. La mise en oeuvre d'une alimentation sous pression de la chambre d'infusion permet de réduire le temps de préparation de la boisson par infusion sans pression.

Selon une caractéristique de l'invention, les moyens de mise en pression comprennent une pompe placée sur le circuit de raccordement entre le réservoir et les moyens de chauffage. Une telle position de la pompe en amont des moyens de chauffage évite un vieillissement prématuré de ladite pompe sous l'effet de la chaleur de l'eau chaude comme cela aurait été le cas si la pompe avait été placée en aval des moyens de chauffage.

Selon une autre caractéristique de l'invention, la machine comprend en sortie des moyens de chauffage une canalisation d'amenée de l'eau chaude raccordée aux circuits d'apport et d'alimentation par l'intermédiaire d'une vanne de sélection.

Selon une forme de réalisation de l'invention, la machine comprend, sous la chambre d'infusion, un logement de réception d'une verseuse amovible de recueil de l'infusion.

Selon une variante de cette forme de réalisation, le logement de réception comprend une plaque chauffante de réception de la verseuse.

Selon une variante de cette forme de réalisation et lorsque la sortie de percolation est distincte de la sortie d'infusion, la sortie de percolation est située devant le logement de réception de la verseuse.

Dans le cadre de cette variante de réalisation, la machine peut alors comprendre devant le logement de réception de la verseuse et sous la sortie de percolation, une plateforme d'accueil d'un récipient amovible de recueil du liquide de percolation.

Selon une autre variante de cette forme de réalisation, la sortie de percolation se situe au dessus du logement de réception de la verseuse.

Bien entendu les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'une machine de préparation d'infusion selon l'invention.
- La figure 1 est perspective schématique d'une machine à infusion selon l'invention.
- La figure 2 est une coupe longitudinale schématique de la machine illustrée à la figure 1.
- La figure 3 est une perspective schématique de la machine illustrée à la figure 1 avec sa chambre d'infusion ouverte.
- La figure 4 est une perspective schématique de la machine illustrée à la figure 1 avec sa chambre de percolation ouverte.
- La figure 5 est une élévation en vue de côté de la machine illustrée à la figure 1.
- La figure 6 est une perspective schématique d'une autre forme de réalisation de la machine selon l'invention.
- La figure 7 est une perspective schématique de la machine illustrée à la figure 6 avec un tiroir constitutif de la chambre de percolation en position ouverte.

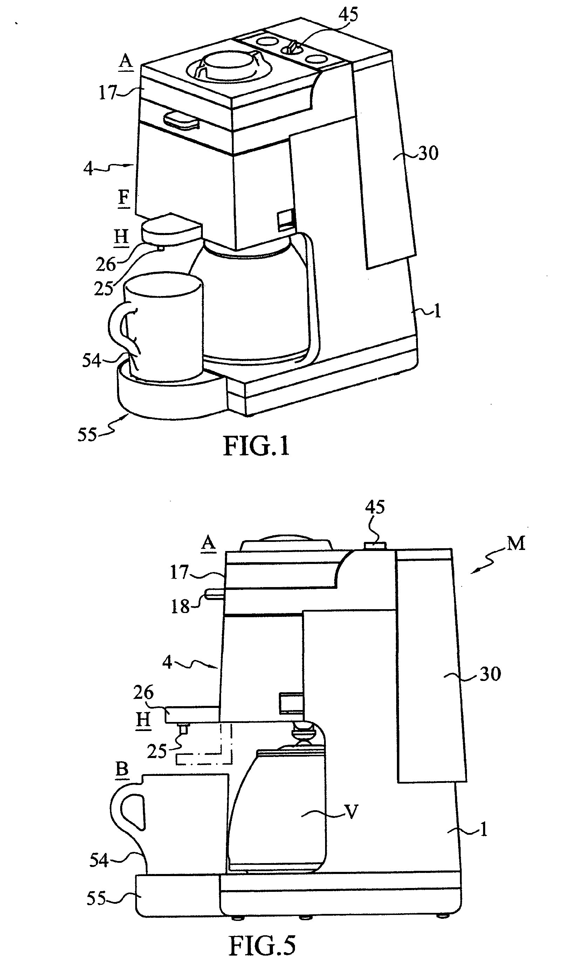

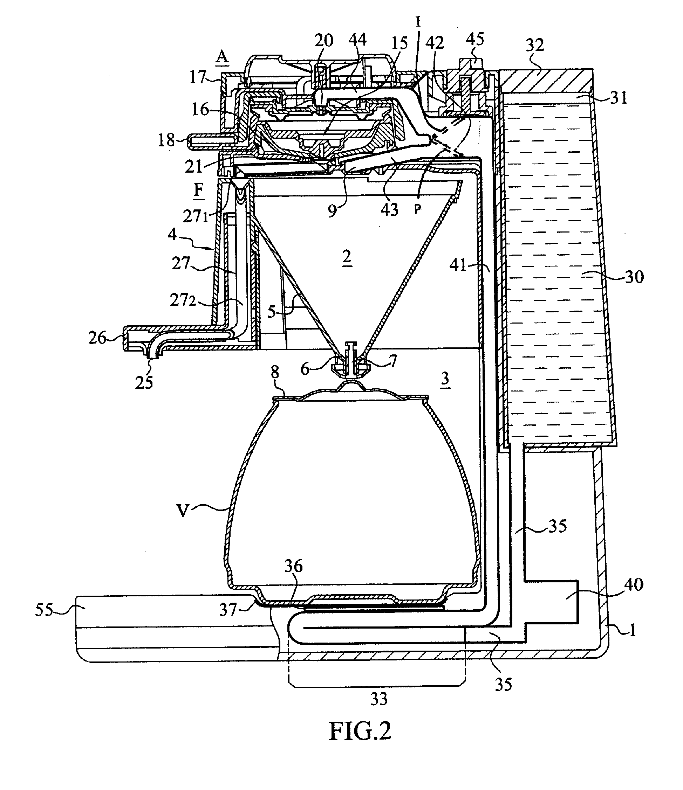

Une machine pour préparer une infusion à base d'eau chaude selon l'invention, telle que représentée figures 1 et 2 et désignée dans son ensemble par la référence M, comprend un châssis 1 qui supporte et délimite une chambre d'infusion sans pression 2 située au-dessus d'un logement de réception 3 d'une verseuse amovible V de recueil de l'infusion préparée dans la chambre 2.

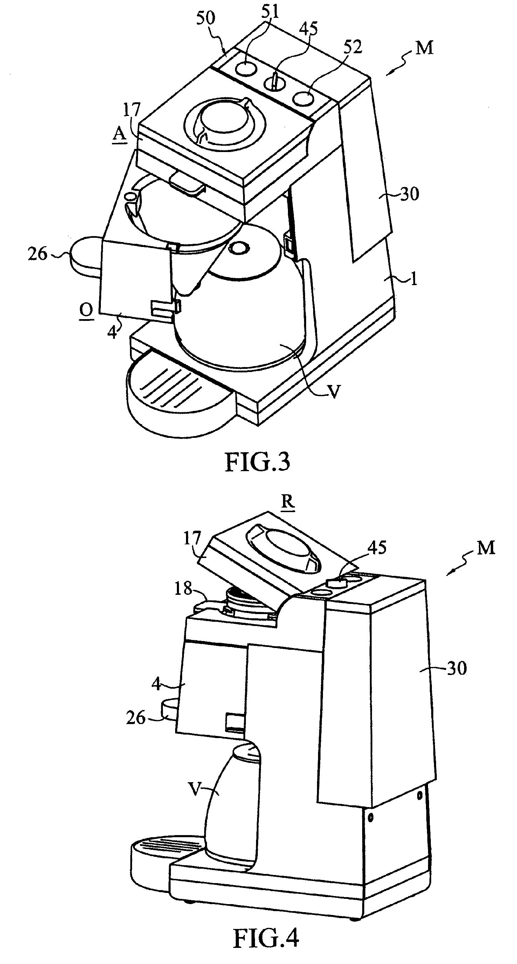

La chambre d'infusion 2 comprend un tiroir 4 mobile, en rotation d'axe vertical, entre une position fermée F, illustrée figures 1 et 2, et une position ouverte O représentée à la figure 3. La chambre d'infusion 2 est délimitée par un porte-filtre 5 solidaire du tiroir 4. Le porte-filtre 5 possède une forme générale d'entonnoir, se trouve largement ouvert en partie haute et présente une paroi périphérique qui converge en direction d'une sortie d'infusion 6 située en partie basse. Selon l'exemple illustré, la sortie d'infusion 6 est équipée d'un clapet anti-goutte 7 actionné en ouverture par un couvercle 8 de la verseuse V. Un tel système anti-goutte est largement connu de l'homme du métier et ne nécessite donc pas une plus ample description. La chambre d'infusion 2 comprend au-dessus du porte-filtre 5 une bouche d'arrivée d'eau 9 dont le mode d'alimentation en eau chaude sera décrit par la suite.

La machine conforme à l'invention comprend, en outre, une chambre de percolation sous pression 15 qui, selon l'exemple illustré, est située au-dessus de la chambre d'infusion 2. La chambre de percolation 15 est dite « sous pression » dans la mesure où la circulation de l'eau y est forcée par opposition à la chambre d'infusion 2 dans laquelle l'eau s'écoule librement par gravité. Ainsi, la chambre d'infusion 2 est en permanence en communication avec l'air libre tandis que la chambre de percolation 15 est étanche au moins à l'eau de manière qu'il puisse y être établi une pression supérieure à la pression atmosphérique. La chambre de percolation 15 comprend un logement de réception 16 d'une dose d'un produit de percolation. Selon l'exemple illustré, le logement de réception 16 est solidaire du châssis 1 et se trouve fermé par un couvercle 17 mobile en rotation d'axe horizontal entre une position abaissée A de fermeture de la chambre de percolation 15, représentée aux figures 1, 2 et 3, et une position relevée R d'ouverture de la chambre de percolation 15, illustrée à la figure 4. Dans le cas présent, la chambre de percolation 15 comprend également un support amovible 18 destiné à recevoir une dose du produit de percolation. Le logement de réception 16, le support amovible 18 et le couvercle 17 sont alors adaptés de manière à assurer une étanchéité au moins à l'eau de la chambre de percolation 15. Cette étanchéité peut, par exemple, résulter de la conformation de ces différentes pièces complétées, éventuellement, par la mise en oeuvre de joints en élastomère comme cela est bien connu de l'homme du métier. La chambre de percolation 15 comprend une entrée 20 d'eau sous pression qui est ici aménagée dans le couvercle 17. Le mode d'alimentation en eau sous pression de l'entrée 20 sera exposé par la suite. La chambre de percolation 15 possède une sortie de percolation 21 qui est aménagée dans le fond du logement de réception 16 à l'opposé de l'entrée 20.

Selon l'exemple illustré, la distribution du jus de percolation s'effectue au niveau d'une bouche de distribution 25 portée par une tête de distribution 26 solidaire du tiroir 4 et située en avant du logement de réception 3 de la verseuse. Le raccordement de la sortie de percolation 21 à la bouche de distribution 25 s'effectue par l'intermédiaire d'un tube 27 dont une première partie 27₁ est portée par le châssis 1 et une seconde partie 27₂ est située à l'intérieur de la tête de distribution 26. Afin de permettre l'écoulement de la mousse générée par la percolation de l'eau au travers du produit de percolation, le diamètre intérieur du tube 27 est, de préférence, supérieur à 5 mm.

L'alimentation en eau de la chambre d'infusion 2 et de la chambre de percolation 15 est assurée à partir d'un réservoir 30 qui équipe le châssis 1 en étant situé derrière les chambres de percolation 15 et d'infusion 2. Le réservoir 30 peut, par exemple, comporter en partie haute une ouverture de remplissage 31 fermée par un couvercle 32. Le réservoir 30 est raccordé à des moyens 33 de chauffage de l'eau par un circuit de raccordement 35. Selon l'exemple illustré les moyens de chauffage 33 comprennent un élément chauffant électrique 36 interposé entre une plaque chauffante 37 de réception de la verseuse V et un double tube en métal situé à l'opposé de la plaque 37 par rapport à l'élément chauffant électrique 36. L'eau à chauffer circule alors dans le double tube.

La machine M comprend, en tant que moyens de mise en pression de l'eau, une pompe 40. Selon l'exemple illustré, la pompe 40 est une pompe à piston électromagnétique adaptée pour établir dans le circuit de raccordement 35 une pression relative comprise entre 0,5 bar et 8 bars et de préférence inférieure à 5 bars. Par pression relative il faut entendre que la pression dans le circuit de raccordement 35 en aval de la pompe 40 est supérieure à la pression atmosphérique d'une valeur comprise entre 0,5 bar et 8 bars ce qui correspond à une pression absolue comprise entre 1,5 bars et 9 bars.

Le circuit d'eau comprend, en aval des moyens de chauffage 33, une canalisation 41 d'amenée de l'eau chaude à une vanne de sélection 42 raccordée, d'une part, à un circuit d'alimentation 43 en eau chaude de la bouche d'arrivée 15 et, d'autre part, à un circuit d'apport 44 d'eau chaude à l'entrée d'eau sous pression 20. Selon l'exemple illustré, la vanne de sélection 42 est commandée au moyen d'un sélecteur 45 accessible sur le dessus du châssis 1. Le sélecteur 45 possède une première position « Infusion » amenant la vanne 42 dans une position 1 correspondant au raccordement de la canalisation d'amenée 41 au circuit d'alimentation 43 et une deuxième position « Percolation » amenant la vanne 42 dans une position P correspondant au raccordement de la canalisation d'amenée 41 au circuit d'apport 44.

La machine M comprend également des moyens de commande 50 comprenant un bouton de mise sous tension 51 et un bouton marche/arrêt 52 pour le démarrage ou l'arrêt d'une séquence ou d'un cycle de fonctionnement de la machine M.

La machine ainsi constituée est mise en oeuvre de la manière suivante.

Si un utilisateur souhaite préparer une quantité importante de boisson chaude, par exemple de café, par infusion dans la chambre d'infusion 2, il met en place dans le porte-filtre 5 un filtre d'une forme complémentaire à celle du porte-filtre 5. Après avoir rempli de café ledit filtre et d'eau le réservoir 30, l'utilisateur place le sélecteur 45 dans la position « Infusion » et actionne le bouton 51 de manière à mettre sous tension la machine M. L'utilisateur actionne ensuite le bouton 52 pour déclencher un cycle de fonctionnement. Les moyens de commande 50 sont alors adaptés pour, en fonction de la position du sélecteur 45, assurer un cycle correspondant à une infusion ou un cycle correspondant à une percolation. Dans le cas évoqué ici d'une infusion, le cycle correspondant à une infusion prévoit tout d'abord une mise en marche des moyens de chauffage 33 puis une mise en marche de la pompe 40 pendant une durée suffisante pour remplir la verseuse V. Après l'arrêt de la pompe 40, l'alimentation des moyens de chauffage 33 sera maintenue pour une durée prédéfinie, par exemple une heure, de manière à maintenir le chauffage de la plaque 37 et garder chauds la verseuse V et son contenu.

Si l'utilisateur souhaite préparer une petite quantité de boisson chaude obtenue par percolation sous pression, il positionne le sélecteur 45 en position « Percolation » et place une dose de café moulu, par exemple conditionnée dans un sachet de matériau perméable à l'eau, dans la chambre de percolation 15. L'utilisateur place également un récipient 54 sous la tête de distribution 25 sur une plate-forme 55 prévue à cet effet et située devant le logement de réception 3. Selon l'exemple illustré, la tête de distribution 26 est mobile en translation verticale entre une position haute H, représentée à la figure 1, et une position basse B, illustrée à la figure 5. Ainsi, l'utilisateur peut régler la hauteur de la tête de distribution 26 en fonction de la taille du récipient 54. Afin de permettre ce réglage, la partie 27₂ du tube 27 située dans la tête de distribution est souple de manière à passer d'une conformation courbe lorsque la tête de distribution 26 est en position haute H à une conformation droite lorsque la tête de distribution est en position basse B.

Lorsque la machine a ainsi été préparée, l'utilisateur actionne le bouton 52 pour lancer un cycle de percolation. Les moyens de commande assurent alors l'alimentation des moyens de chauffage 33 puis le fonctionnement de la pompe 40 pour une durée prédéfinie inférieure à celle nécessaire au remplissage de la verseuse V et, par exemple suffisante, pour assurer la production de 20cl de café. L'utilisateur a, de plus, la possibilité d'interrompre le cycle en cours de déroulement par l'actionnement du bouton 52.

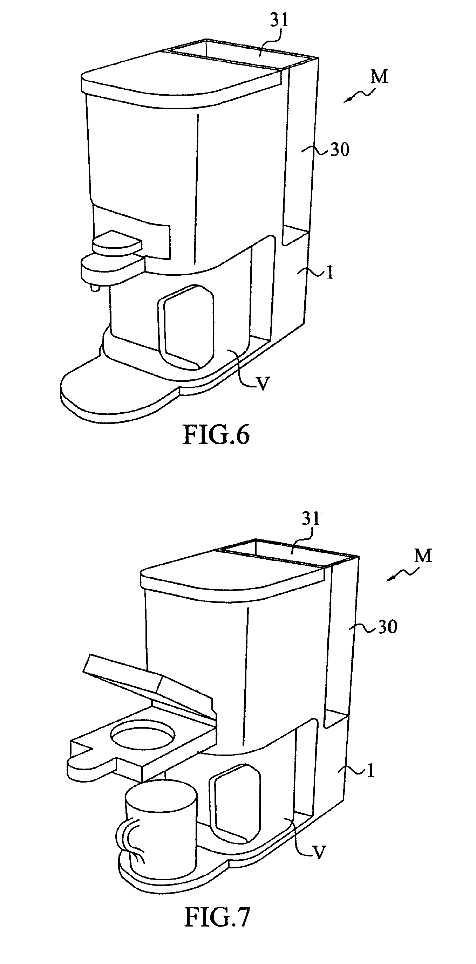

Selon l'exemple décrit précédemment en relation avec les figures 1 à 5, la chambre de percolation de la machine selon l'invention est située au-dessus de la chambre d'infusion. Toutefois, un tel mode de réalisation n'est pas nécessaire à la réalisation d'une machine selon l'invention. Ainsi, les figures 6 et 7 montrent une machine également conforme à l'invention dont la chambre de percolation est en partie située sous la chambre d'infusion. Selon cet exemple et comme le montre plus particulièrement la figure 7, la chambre de percolation est aménagée dans un tiroir mobile en translation horizontale.

Bien entendu, diverses autres modifications peuvent être apportées à l'invention dans le cadre des revendications annexées.

## Revendications

1. Machine pour préparer une infusion à base d'eau chaude comprenant :
- un réservoir d'eau (30),
- une chambre d'infusion sans pression (2) comprenant :
- un porte-filtre (5) ouvert en partie haute et pourvu d'une sortie d'infusion (6) en partie basse,
- une bouche d'arrivée (9) d'eau au-dessus du porte-filtre (5),
- des moyens de chauffage (33) électrique de l'eau,
- un circuit de raccordement (35) des moyens de chauffage (33) au réservoir d'eau (30),
- un circuit d'alimentation (43) en eau chaude de la bouche d'arrivée (9) de la chambre d'infusion sans pression, raccordé aux moyens de chauffage (33),
- une chambre de percolation (15) sous pression qui est étanche à l'eau et distincte de la chambre d'infusion (2) et qui comprend un logement de réception (16) d'une dose d'un produit de percolation, une entrée (20) d'eau sous pression et une sortie de percolation (21),
- des moyens (40) de mise en pression de l'eau,
- un circuit d'apport (44) de l'eau chaude sous pression à l'entrée (20) de la chambre de percolation (15), qui est raccordé aux moyens de chauffage (33) électrique de l'eau et qui est en partie au moins distinct du circuit d'alimentation (43). **caractérisée en ce que** la chambre de percolation (15) est située en partie au moins au-dessus ou en-dessous de la chambre d'infusion (2).

2. Machine selon la revendication 1, **caractérisée en ce que** la sortie de percolation (21) est distincte de la sortie d'infusion (6).

3. Machine selon la revendication 2, **caractérisée en ce qu'**elle comprend une tête de distribution (26) comprenant une bouche de distribution (25) raccordée par un tube (27) à la sortie de percolation (21).

4. Machine selon la revendication 3, **caractérisé en ce que** le tube (27) possède un diamètre intérieur supérieur à 5mm.

5. Machine selon la revendication 3 ou 4, caractérisée en que en ce que la tête de distribution (26) est mobile entre une position haute (H) et une position basse (B).

6. Machine selon la revendication 1, **caractérisée en ce que** la sortie de percolation (21) débouche dans ou est raccordée à la sortie d'infusion (6).

7. Machine selon l'une des revendications précédentes, **caractérisée en ce que** la chambre de percolation (15) comprend un support amovible (18) destiné à recevoir une dose du produit de percolation.

8. Machine selon l'une des revendications précédentes **caractérisée en ce que** les moyens (40) de mise en pression de l'eau sont adaptés pour établir une pression d'eau comprise entre 0,5 bar et 8 bars et de préférence inférieure à 5 bars.

9. Machine selon l'une des revendications précédentes, **caractérisée en ce que** les moyens de mise en pression (40) comprennent une pompe placée sur le circuit de raccordement (35) entre le réservoir et les moyens de chauffage (33).

10. Machine selon l'une des revendications précédentes, **caractérisée en ce qu'**elle comprend en sortie des moyens de chauffage (33) une canalisation (41) d'amenée de l'eau chaude raccordée aux circuits d'apport (44) et d'alimentation (43) par l'intermédiaire d'une vanne de sélection (42).

11. Machine selon l'une des revendications précédentes, **caractérisée en ce qu'**elle comprend, sous la chambre d'infusion (2), un logement de réception (3) d'une verseuse amovible (V) de recueil de l'infusion.

12. Machine selon la revendication 11, **caractérisée en ce que** le logement de réception (3) comprend une plaque chauffante (37) de réception de la verseuse (V).

13. Machine selon la revendication 11 ou 12 et l'une des revendications 2 à 4, **caractérisée en ce que** la sortie de percolation (21) est située devant le logement de réception (3) de la verseuse.

14. Machine selon la revendication 11, **caractérisé en ce qu'**elle comprend devant le logement de réception (3) de la verseuse et sous la sortie de percolation (21) une plateforme (55) d'accueil d'un récipient amovible du liquide de percolation.

15. Machine selon la revendication 11 ou 12, **caractérisée en ce que** la sortie de percolation (21) se situe au dessus du logement de réception (3) de la verseuse.

## Patentansprüche

1. Maschine für die Zubereitung eines Aufbrühgetränks auf Heißwasserbasis, umfassend:
- einen Wassertank (30),
- eine drucklose Aufbrühkammer (2) mit:
_{■} einem Filterhalter (5), der im oberen Teil offen ist und im unteren Teil mit einem Aufbrühauslauf (6) ausgestattet ist,
_{■} einer Wasserzulaufmündung (9) über dem Filterhalter (5),
- elektrische Heizmittel (33) für das Wasser,
- einen Verbindungskreis (35) der Heizmittel (33) mit dem Wassertank (30),
- einen Kreis für die Versorgung (43) der Zulaufmündung (9) der drucklosen Aufbrühkammer mit Heißwasser, der an die Heizmittel (33) angeschlossen ist,
- eine unter Druck stehende Brühkammer (15), die wasserdicht und von der Aufbrühkammer (2) verschieden ist und die eine Aussparung zur Aufnahme (16) einer Dosis eines Brühprodukts, einen unter Druck stehenden Wassereinlauf (20) und einen Brühauslauf (21) aufweist,
- Mittel (40) zur Druckbeaufschlagung des Wassers,
- einen Kreis für die Zuführung (44) des unter Druck stehenden Heißwassers zum Einlauf (20) der Brühkammer (15), der an die elektrischen Heizmittel (33) für das Wasser angeschlossen ist und der wenigstens teilweise vom Versorgungskreis (43) verschieden ist,
**dadurch gekennzeichnet, dass** sich die Brühkammer (15) wenigstens teilweise über oder unter der Aufbrühkammer (2) befindet.

2. Maschine nach Anspruch 1, **dadurch gekennzeichnet, dass** der Brühauslauf (21) vom Aufbrühauslauf (6) verschieden ist.

3. Maschine nach Anspruch 2, **dadurch gekennzeichnet, dass** sie einen Abgabekopf (26) umfasst, der eine Abgabeöffnung (25) aufweist, die über eine Röhre (27) mit dem Brühauslauf (21) verbunden ist.

4. Maschine nach Anspruch 3, **dadurch gekennzeichnet, dass** die Röhre (27) einen Innendurchmesser von mehr als 5 mm aufweist.

5. Maschine nach Anspruch 3 oder 4, **dadurch gekennzeichnet, dass** der Abgabekopf (26) zwischen einer oberen Position (H) und einer unteren Position (B) beweglich ist.

6. Maschine nach Anspruch 1, **dadurch gekennzeichnet, dass** der Brühauslauf (21) in den Aufbrühauslauf (6) mündet oder mit diesem verbunden ist.

7. Maschine nach einem der vorhergehenden Ansprüche, **dadurch gekennzeichnet, dass** die Brühkammer (15) einen herausnehmbaren Träger (18) umfasst, der zur Aufnahme einer Dosis des Brühprodukts bestimmt ist.

8. Maschine nach einem der vorhergehenden Ansprüche, **dadurch gekennzeichnet, dass** die Mittel (40) zur Druckbeaufschlagung des Wassers angepasst sind, um einen Wasserdruck zu erzeugen, der zwischen 0,5 bar und 8 bar und vorzugsweise weniger als 5 bar beträgt.

9. Maschine nach einem der vorhergehenden Ansprüche, **dadurch gekennzeichnet, dass** die Mittel zur Druckbeaufschlagung (40) eine Pumpe umfassen, die am Verbindungskreis (35) zwischen Tank und Heizmittel (33) angeordnet ist.

10. Maschine nach einem der vorhergehenden Ansprüche, **dadurch gekennzeichnet, dass** sie am Ausgang der Heizmittel (33) eine Zuleitung (41) für das Heißwasser umfasst, die über ein Auswahlventil (42) mit dem Zuführkreis (44) und dem Versorgungskreis (43) verbunden ist.

11. Maschine nach einem der vorhergehenden Ansprüche, **dadurch gekennzeichnet, dass** sie unter der Aufbrühkammer (2) eine Aussparung zur Aufnahme (3) einer herausnehmbaren Kanne (V) zum Fassen des Aufbrühgetränks aufweist.

12. Maschine nach Anspruch 11, **dadurch gekennzeichnet, dass** die Aussparung zur Aufnahme (3) eine Heizplatte (37) zur Aufnahme der Kanne (V) umfasst.

13. Maschine nach Anspruch 11 oder 12 und einem der Ansprüche 2 bis 4, **dadurch gekennzeichnet, dass** sich der Brühauslauf (21) vor der Aussparung zur Aufnahme (3) der Kanne befindet.

14. Maschine nach Anspruch 11, **dadurch gekennzeichnet, dass** sie vor der Aussparung zur Aufnahme (3) der Kanne und unter dem Brühauslauf (21) eine Plattform (55) zur Aufnahme eines abnehmbaren Gefäßes für die Brühflüssigkeit umfasst.

15. Maschine nach Anspruch 11 oder 12, **dadurch gekennzeichnet, dass** sich der Brühauslauf (21) über der Aussparung zur Aufnahme (3) der Kanne befindet.

## Claims

1. A machine for preparing an infusion with hot water comprising:
- a water tank (30),
- a non-pressurised infusion chamber (2) including:
_{■} a filter holder (5) open in the upper part and provided with an infusion outlet (6) in the lower part,
_{■} a water intake vent (9) above the filter holder (5),
- electric water heating means (33),
- a connection circuit (35) connecting the heating means (33) to the water tank (30),
- a feed circuit (43) for feeding hot water to the intake vent (9) of the non-pressurised infusion chamber, connected to the heating means (33),
- a pressurised water-tight percolation chamber (15) distinct from the infusion chamber (2) and which includes a housing (16) for receiving a dose of a percolation product, a pressurised water inlet (20) and a percolation outlet (21),
- means (40) for pressurising the water,
- a supply circuit (44) for supplying pressurised hot water to the inlet (20) of the percolation chamber (15), which is connected to the electric water heating means (33) and which is at least partially distinct from the feed circuit (43),
**characterised in that** the percolation chamber (15) is located at least partially above or below the infusion chamber (2).

2. A machine according to claim 1, **characterised in that** the percolation outlet (21) is distinct from the infusion outlet (6).

3. A machine according to claim 2, **characterised in that** it comprises a dispensing head (26) including a dispensing vent (25) connected by a tube (27) to the percolation outlet (21).

4. A machine according to claim 3, **characterised in that** the tube (27) has an inner diameter greater than 5 mm.

5. A machine according to claim 3 or 4, **characterised in that** the dispensing head (26) moves between a high position (H) and a low position (B).

6. A machine according to claim 1, **characterised in that** the percolation outlet (21) opens into, or is connected to the infusion outlet (6).

7. A machine according to one of the preceding claims, **characterised in that** the percolation chamber (15) includes a removable support (18) designed to receive a dose of the percolation product.

8. A machine according to one of the preceding claims **characterised in that** the means (40) for pressurising the water is adapted to establish a water pressure ranging between 0.5 bar and 8 bar, and preferably below 5 bar.

9. A machine according to one of the preceding claims, **characterised in that** the pressurising means (40) includes a pump placed on the connection circuit (35) between the tank and the heating means (33).

10. A machine according to one of the preceding claims, **characterised in that** it comprises at the outlet of the heating means (33) a hot water supply pipe (41) connected to the supply circuit (44) and the feed circuit (43) by means of a selector valve (42).

11. A machine according to one of the preceding claims, **characterised in that** it comprises, under the infusion chamber (2), a housing (3) for receiving a removable jug (V) which collects the infusion.

12. A machine according to claim 11, **characterised in that** the reception housing (3) includes a heating plate (37) for receiving the jug (V).

13. A machine according to claim 11 or 12 and one of claims 2 to 4, **characterised in that** the percolation outlet (21) is located in front of the housing (3) receiving of the jug.

14. A machine according to claim 11, **characterised in that** it comprises in front of the housing (3) receiving the jug and under the percolation outlet (21) a platform (55) for accommodating a removable container holding the percolation liquid.

15. A machine according to claim 11 or 12, **characterised in that** the percolation outlet (21) is located above the housing (3) receiving the jug.
